# FASCICULE DE BREVET EUROPEEN

(11) **EP 2 760 799 B1**
(45) Date de publication et mention de la délivrance du brevet: **08.04.2015**
(21) Numéro de dépôt: 12762659.6
(22) Date de dépôt: 28.09.2012
(51) Int. Cl.: C03B 19/12, C04B 35/624, C03B 37/016, C03B 8/02

(54) **PROCEDE DE FABRICATION D'UN OBJET A PARTIR D'UNE SOLUTION SOL-GEL**
VERFAHREN ZUR HERSTELLUNG EINES GEGENSTANDES AUS EINER SOL-GEL-LÖSUNG
PROCESS FOR MANUFACTURING AN OBJECT FROM A SOL-GEL SOLUTION

(30) Priorité: 29.09.2011 FR 1158768
(43) Date de publication de la demande: 06.08.2014
(73) Titulaire: Commissariat à l'Énergie Atomique et aux Énergies Alternatives, 75015 Paris (FR)
(72) Inventeur: FATHALLAH, Tarek, 38500 Voiron (FR); MARCHAND, Gilles, 38119 Pierre-Chatel (FR)
(74) Mandataire: Ahner, Philippe
(86) Numéro de dépôt international: PCT/EP2012/069277
(87) Numéro de publication internationale: WO 2013/045671

(56) Documents cités:
- JP-A- 1 056 330
- JP-A- 62 265 127
- US-A- 6 099 792

## Description

### DOMAINE TECHNIQUE

La présente invention a trait à un procédé de fabrication d'un objet, par exemple, en céramique, verre ou en un matériau hybride inorganique/organique impliquant un procédé sol-gel.

Ce procédé, de par la diversité des objets qu'il permet de préparer, trouve application dans de nombreux domaines, qui seront exposés ci-après.

### ÉTAT DE LA TECHNIQUE ANTÉRIEURE

Classiquement, le procédé sol-gel consiste, à préparer une solution contenant des précurseurs à base d'éléments métalliques ou métalloïdes (qui peuvent être des composés organométalliques ou des sels métalliques) et un ou plusieurs solvants organiques, la solution résultante formant ainsi un sol (qui peut être également appelé solution sol-gel). Au contact de l'humidité ambiante, les précurseurs contenus dans cette solution sol-gel subissent, en partie, une étape d'hydrolyse et une étape de condensation, pour former un réseau d'oxyde emprisonnant le solvant, de sorte à former un gel. Le gel est ensuite amené à être séché, pour former à l'issue de ce séchage un objet monolithique.

A l'heure actuelle, deux techniques de séchage prédominent :
- le séchage évaporatif ; et
- le séchage supercritique.

Le séchage évaporatif consiste à éliminer le ou les solvants organiques présents dans la solution sol-gel par chauffage à pression atmosphérique ou sous pression réduite (à savoir, une pression inférieure à la pression atmosphérique). A l'issue de ce séchage, il est obtenu un gel sec (appelé également xérogel) se présentant sous forme d'un monolithe poreux, qui peut présenter, de façon désavantageuse, des craquelures et des fissurations en raison de la présence de fortes tensions superficielles au niveau des pores. Qui plus est, lorsque cette technique est mise en oeuvre avec une solution sol-gel coulée dans un moule ouvert sur l'extérieur (lorsqu'il s'agit notamment de réaliser un objet de forme plus complexe qu'un monolithe), il s'avère que le séchage du gel n'est pas homogène selon toutes les directions, ce qui peut conduire à un objet, dont la forme ne correspond pas au moule de départ. Enfin, le séchage non homogène du gel induit, par ailleurs, des contraintes mécaniques supplémentaires, qui favorisent l'apparition de fissures au sein de l'objet.

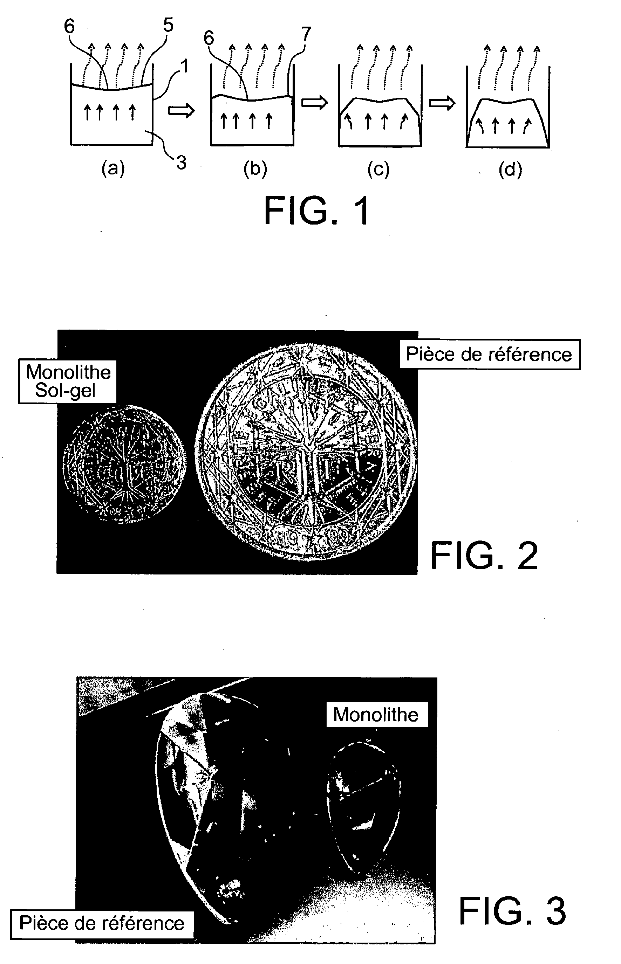

Sans être lié par la théorie, ces constats peuvent s'expliquer par les phénomènes suivants, illustrés par la figure 1 jointe en annexe, représentant un moule 1 comprenant une solution sol-gel 3 :
- dans un premier temps, le séchage commence par la face 5 en contact avec l'atmosphère par migration du solvant du bas vers le haut (cette migration étant représentée par des flèches ascendantes en trait plein sur les parties (a), (b), (c), (d) de la figure 1, les flèches ascendantes en pointillés indiquant le phénomène d'évaporation du ou des solvants organiques, moyennant quoi il se forme un ménisque 6 traduisant la déformation du gel en cours de séchage (cf. parties (a) et (b) de la figure 1) ;
- dans un deuxième temps, le séchage progresse sur les côtés à partir des bords 7 du ménisque 6 (cf. parties (c), (d) de la figure 1).

Pour pallier les inconvénients liés à la mise en oeuvre du séchage évaporatif dans un moule, il a été proposé, dans la demande de brevet EP 0 719 735, un procédé de fabrication d'un objet à partir d'une solution sol-gel comprenant les étapes suivantes :
- une étape de dépôt, sur un support liquide, d'une solution sol-gel comprenant une suspension de particules dans un milieu dispersant ;
- une étape de gélification de ladite solution pour former un corps gélifié, dont la forme correspond à l'objet que l'on souhaite fabriquer ; et
- une étape de séchage du corps gélifié pour produire l'objet consolidé.

Grâce à l'utilisation d'un support liquide en lieu et place d'un moule solide, il a été constaté une diminution substantielle des déformations induites par les phénomènes de contraction intervenant lors des processus de gélification et de séchage.

Toutefois, ce procédé alternatif présente les inconvénients suivants :
- il permet de n'obtenir que des objets sous forme de films minces, ce qui exclut la préparation d'objets de forme complexe ;
- il y a risque de contamination de l'objet à fabriquer par le liquide constitutif du support liquide.

Quant au séchage supercritique, il consiste, comme son nom l'indique, à soumettre la solution sol-gel à des conditions supercritiques, moyennant quoi la phase gazeuse et la phase liquide deviennent indiscernables. Ce principe de séchage est utilisé, notamment, dans le procédé décrit dans US 7,216,509.

Si cette technique de séchage peut permettre d'obtenir un séchage de l'objet dans son moule sans retrait volumique, l'utilisation d'un moule ouvert sur l'extérieur ne permet toutefois pas d'obtenir un contrôle sur toutes les faces de l'objet obtenu, notamment sur la face qui est directement en contact avec l'extérieur.

La demande de brevet JP62265127 divulgue un procédé de fabrication de verre de silice dans lequel un gel est introduit dans un moule et séché. Un film perméable aux gaz tel que du PVC ou du PE sert de couvercle au moule et permet de contrôler l'évaporation des solvants.

Le brevet US6,099,792 divulgue la fabrication d'un monolithe de silice dans laquelle une solution est introduite dans un moule poreux, la solution étant ensuite gélifiée et séchée dans le moule. Après gélification du liquide peut être ajouté pour immerger le gel et le moule contenant le gel placé dans un autoclave.

Au vu de ce qui existe, les auteurs de la présente invention se sont donc fixé pour objectif de proposer un procédé de fabrication d'un objet à partir d'une solution sol-gel ne présentant pas les inconvénients susmentionnés, à savoir :
- des limitations quant à la forme de l'objet que l'on souhaite obtenir ;
- un séchage non uniforme qui induit une déformation de l'objet par rapport à la forme que l'on souhaite initialement obtenir ainsi qu'une microstructure non homogène.

### EXPOSÉ DE L'INVENTION

Pour surmonter ces inconvénients, les auteurs de la présente invention proposent un procédé de fabrication d'un objet en un matériau constitutif obtenu à partir d'une solution sol-gel comprenant successivement les étapes suivantes :
a) une étape d'introduction dans un moule de l'objet à fabriquer de ladite solution sol-gel ;
b) une étape de gélification de la solution sol-gel ;
c) une étape de séchage dans ledit moule dudit gel obtenu en b), moyennant quoi ledit gel se transforme en le matériau constitutif de l'objet susmentionné, caractérisé en ce que le moule consiste en une enceinte fermée et comprend un matériau apte à permettre l'évacuation des gaz formés lors de l'étape b) et/ou l'étape c).

Avant d'entrer plus en détail dans l'exposé de l'invention, nous précisons les définitions suivantes. ,

Par « gaz formés lors de l'étape b) et/ou l'étape c) », on entend les molécules gazeuses issues de la transformation de la solution sol-gel en gel et/ou du séchage dudit gel (ces molécules pouvant être, par exemple, des molécules de solvant utilisées dans la solution sol-gel et des produits de réaction issus de la transformation de la solution sol-gel en gel).

Par « moule consistant en une enceinte fermée », on entend un moule comprenant une cavité n'étant pas en communication directe avec l'atmosphère ambiante entourant ledit moule, ce qui signifie en d'autres termes que, une fois la solution sol-gel introduite dans le moule, ce dernier est isolé de l'atmosphère ambiante entourant ledit moule. Ceci n'exclut pas que ce moule comporte une entrée permettant l'introduction de ladite solution, dès lors que celle-ci est obturée une fois la solution sol-gel introduite. Le moule peut comprendre, en outre, des éléments rapportés, tels que des pièces amovibles sous forme de cylindres ou de poutre intégrés pour la réalisation de pièces pouvant présenter des trous correspondant à la forme des éléments rapportés. Dans ce cas, il peut être prévu un système de retrait de ces éléments rapportés sans ouverture du moule. Le matériau apte à évacuer les gaz formés lors de l'étape de gélification et/ou l'étape de séchage fait partie intégrante du moule et ne résulte pas ainsi d'un élément d'apport, tel qu'un couvercle ajouté ultérieurement. Avantageusement, le moule consiste en une enceinte fermée monobloc constituée uniquement dudit matériau apte à évacuer les gaz formés lors de l'étape de gélification et/ou de l'étape de séchage. Le confinement de la solution sol-gel dans un moule homogène, c'est-à-dire constitué d'un même matériau tel que défini ci-dessus, est avantageux. Cela permet une évacuation des gaz dans ledit matériau de confinement et, par conséquent, une rétractation uniforme du gel.

Par solution sol-gel, on entend classiquement une solution comprenant un ou plusieurs précurseurs moléculaires de métal ou de métalloïde et un ou plusieurs solvants organiques.

Grâce à l'utilisation d'un moule à enceinte fermée comprenant un matériau apte à évacuer les gaz formés lors de l'étape de gélification et/ou l'étape de séchage, le procédé de l'invention comble les lacunes rencontrées dans les procédés de l'art antérieur et permet notamment d'obtenir :
- des objets pouvant présenter une géométrie complexe sur toutes les faces ;
- une maîtrise du séchage permettant d'uniformiser celui-ci, ce qui se traduit par une rétraction uniforme du gel et ainsi un respect des côtes relatives de l'objet que l'on souhaite obtenir par rapport au moule de cet objet et ce qui se traduit également par un meilleur contrôle des caractéristiques microstructurales de l'objet ; soit, en d'autres termes, une conservation de la proportionnalité entre les dimensions de l'objet, lorsque ce gel se contracte sous l'effet du séchage ;
- un confinement de l'atmosphère existant dans le moule, ce qui permet de préserver la solution sol-gel et le gel du milieu extérieur et de prévenir ainsi d'éventuelles fissurations.

De préférence, l'épaisseur de paroi du moule est identique sur l'intégralité du moule, ce qui permet d'assurer une vitesse de séchage uniforme en tous points du moule.

Comme mentionné ci-dessus, le procédé de l'invention comprend une étape d'introduction dans un moule de l'objet à fabriquer de ladite solution sol-gel, destinée, après gélification et séchage, à constituer le matériau constitutif de l'objet susmentionné.

Cette étape d'introduction peut se faire par injection de ladite solution sol-gel dans le moule jusqu'à remplissage complet de ce dernier, par exemple, via une seringue traversant la paroi du moule (notamment lorsque le moule est à base d'un matériau élastomère).

Le moule comprend un matériau apte à permettre le dégagement des gaz formés lors de l'étape de gélification et/ou de l'étape de séchage.

Un matériau répondant à ces spécificités peut être un matériau élastomère, par exemple, un matériau élastomère de la famille des polysiloxanes.

Plus particulièrement, un tel matériau peut être un matériau élastomère appartenant à la famille des polydiméthylsiloxanes, cette famille étant caractérisée par la présence d'un enchaînement de motifs répétitifs de formule (I) suivante :

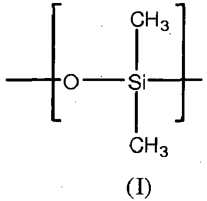

Outre la capacité à permettre l'évacuation des gaz formés lors de la gélification et/ou du séchage, les matériaux élastomères ont pour avantage d'absorber les contraintes mécaniques générées lors de l'étape de gélification et de l'étape de séchage. D'autre part, ces matériaux élastomères présentent d'excellentes propriétés de moulage, ce qui permet de respecter parfaitement les dimensions de l'objet initial.

Certains matériaux élastomères, comme cela est le cas des polydiméthylsiloxanes, sont transparents aux rayons UV, ce qui les rend intéressants lorsque l'on souhaite induire par rayons UV la gélification de la solution sol-gel introduite dans le moule.

Le moule peut être à base d'autres matériaux organiques que ceux mentionnés ci-dessus ou d'autres matériaux inorganiques, dès lors qu'ils sont aptes à permettre l'évacuation des gaz formés lors de l'étape de gélification et/ou de l'étape de séchage.

Préalablement à l'étape d'introduction a), le procédé de l'invention peut comprendre une étape de préparation d'un moule de l'objet à fabriquer.

Cette étape de préparation peut consister à mouler une pièce de forme correspondant à l'objet que l'on souhaite fabriquer, moyennant quoi il résulte de cette étape un moule de l'objet à fabriquer, étant entendu que ce moule comprend un matériau apte à permettre l'évacuation des gaz formés lors de l'étape de gélification et/ou l'étape de séchage.

Selon la nature du matériau constitutif du moule, cette étape de préparation peut se dérouler selon différentes variantes.

A titre d'exemple, lorsque le moule comprenant un matériau du type polydiméthylsiloxane, l'étape de préparation du moule peut comprendre les opérations suivantes :
- une opération de mise en contact d'une pièce de forme correspondant à l'objet que l'on souhaite fabriquer avec une solution comprenant :
   *un polymère comprenant, dans sa chaîne principale, un enchaînement de motif répétitif de formule (I) telle que définie ci-dessus et au moins deux groupes terminaux éthyléniques ; et
   *un agent de réticulation ;
- une opération de réticulation de ladite solution ;
- une opération de retrait de la pièce de départ, moyennant quoi il subsiste ledit moule.

L'opération de mise en contact peut être réalisée dans un récipient dans lequel est placée la pièce susmentionnée, ce récipient étant rempli d'une solution telle que définie ci-dessus.

Le polymère susmentionné peut correspondre à un polymère de formule (II) suivante : 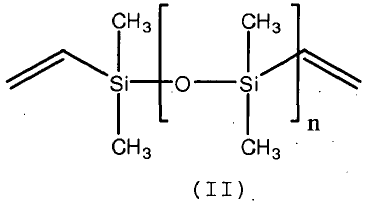 n représentant le nombre de répétition du motif répétitif pris entre crochets.

L'agent de réticulation peut être de divers types.

Lorsqu'il s'agit de pratiquer une réticulation à chaud, l'agent de réticulation peut être un ou plusieurs peroxydes organiques, tels que le peroxyde de benzoyle, le peroxyde de dicumyle et les mélanges de ceux-ci.

Lorsqu'il s'agit de pratiquer une réticulation à froid, ce qui est le cas notamment avec les élastomères bicomposants, l'agent de réticulation peut être :
- un silicate d'alcoyle tétrafonctionnel en présence d'un catalyseur organostanneux et d'un sel de platine ;
- un agent réticulant du type R-SiX₃ ou SiX₄ en présence d'un sel métallique, dans lequel R peut être un groupe alkyle et X peut être un groupe hydrolysable, tel qu'un groupe acétoxy, alcoxy, amino, amido.

La solution susmentionnée peut être disponible commercialement, par exemple, sous forme d'un kit comprenant deux parties, une première partie comprenant ledit polymère et une deuxième partie comprenant ledit agent de réticulation, ces deux parties devant être mélangées pour constituer la solution.

L'opération de réticulation peut consister, lorsque la réticulation doit s'effectuer à chaud, à chauffer l'ensemble formé par la pièce et la solution à une température et durée appropriées (on parle, alors de thermoréticulation) pour obtenir la transformation de la solution en un matériau solide entourant la pièce de forme correspondant à l'objet que l'on souhaite fabriquer.

L'opération de réticulation peut également s'effectuer à température ambiante, lorsque la réticulation peut s'effectuer à froid.

A l'issue de cette opération de réticulation, la pièce est retirée de sorte à laisser subsister uniquement le moule de l'objet à fabriquer. Cette opération de retrait peut être précédée par une opération de découpe du matériau solide en au moins deux parties de sorte à pouvoir retirer la pièce. Dans ce cas de figure, il s'entend que les parties découpées seront réassemblées après le retrait de la pièce, tout en ménageant, si besoin est, une entrée destinée à l'introduction subséquente de la solution sol-gel dans le moule.

Il est possible également d'envisager la fabrication du moule en plusieurs parties distinctes (par exemple, en deux parties), d'assembler ces parties par simple pression mécanique ou par électromagnétisme et de désassembler ces parties sans qu'il soit nécessaire de procéder à une opération de découpe.

Comme mentionné ci-dessus, la solution sol-gel est une solution comprenant un ou plusieurs précurseurs moléculaires de métal ou de métalloïde et un ou plusieurs solvants organiques.

Cette solution sol-gel peut être également préalablement préparée à l'étape d'introduction a), cette étape de préparation consistant à mettre en contact un ou plusieurs précurseurs moléculaires de métal ou de métalloïde avec un milieu comprenant un ou plusieurs solvants organiques et éventuellement d'autres adjuvants, tel que de l'eau, un catalyseur.

Le métal peut être choisi dans un groupe constitué par les métaux de transition, les métaux lanthanides et les métaux dits post-transitionnels des colonnes IIIA et IVA de la classification périodique des éléments. L'élément métallique de transition peut être choisi parmi Ti, V, Cr, Mn, Fe, Co, Ni, Cu, Zn, Y, Zr, Nb, Mo, Ru, Rh, Pd, Ag, Cd, Hf, Ta, W, Re, Os, Ir, Pt). L'élément lanthanide peut être choisi parmi La, Ce, Pr, Nd, Sm, Eu, Gd, Tb, Dy, Er, Yb. L'élément métallique post-transitionnel peut être choisi parmi les éléments du groupe IIIA Al, Ga, In et T1 et les éléments du groupe IVA Ge, Sn et Pb.

L'élément métalloïde est choisi avantageusement parmi Si, Se, Te.

Il peut s'agir également de toutes combinaisons entre métaux de transition, métaux lanthanides, métaux post-transitionnels et métalloïdes.

Les précurseurs moléculaires de métal ou de métalloïde peuvent se présenter sous forme de sels inorganiques de métal ou métalloïde tels que des halogénures (fluorures, chlorures, bromures, iodures), des sels alcalins (tels que, par exemple, du silicate de sodium).

Les précurseurs moléculaires de métal ou de métalloïde peuvent se présenter également sous forme de composés organométalliques de métal ou métalloïde, tels que, notamment, des alcoxydes, par exemple, ceux répondant à la formule (RO)ₙM, dans laquelle M désigne le métal ou le métalloïde, n représente le nombre de ligands liés à M, ce nombre correspondant également au degré d'oxydation de M et R représente un groupe alkyle, linéaire ou ramifié, pouvant comporter de 1 à 10 atomes de carbone ou un groupe phényle.

Les précurseurs moléculaires de métal ou de métalloïde, tels que décrits ci-dessus, sont mis en contact avec un milieu comprenant un solvant organique, de manière à former une solution sol-gel.

De préférence, le solvant organique est choisi parmi :
*les monoalcools aliphatiques ou aromatiques, saturés ou insaturés, par exemple ceux de formule R¹-OH, dans laquelle R¹ représente un groupe alkyle, linéaire ou ramifié, comprenant de 1 à 30 atomes de carbone, de préférence de 1 à 10 atomes de carbone ou un groupe phényle ;
*les diols, par exemple, ceux de formule HO-R²-OH, dans laquelle R² représente un groupe alkylène, linéaire ou ramifié, comprenant de 1 à 30 atomes de carbone, de préférence de 1 à 10 atomes de carbone, ou un groupe phénylène.

A titre d'exemples de diols, on peut citer l'éthylèneglycol, le diéthylèneglycol ou encore le triéthylèneglycol.

Outre la présence d'un ou plusieurs précurseurs moléculaires et d'un ou plusieurs solvants organiques, la solution sol-gel peut comprendre d'autres adjuvants, tels que :
- l'eau, qui peut contribuer à faciliter le processus de gélification de la solution sol-gel ;
- des catalyseurs permettant d'accélérer la cinétique des réactions d'hydrolyse et de condensation lors de la transformation de la solution sol-gel en gel (ces catalyseurs pouvant être un acide inorganique, tel que l'acide inorganique, un acide organique, tel que l'acide acétique) ;
- des pigments organiques ou inorganiques ;
- des composés organiques à propriétés optiques, tels que des composés fluorophores, des composés phosphorescents, des agents anti-UV, des agents antireflet ou des composés ayant une fonction réactive avec des analytes (en vue d'assurer, par exemple, la détection d'analytes).

Préalablement à l'étape d'introduction a), le moule peut être amené à subir une étape de traitement de sa surface interne (c'est-à-dire la surface destinée à être en contact avec la solution sol-gel), de sorte à minimiser l'adhérence du gel (résultant de la gélification de la solution sol-gel) et du matériau constitutif de l'objet (après transformation du gel en le matériau constitutif de l'objet) et ainsi faciliter le retrait de cet objet du moule. Il s'entend que ce traitement ne doit pas modifier, ou en tout cas pas de façon substantielle, la perméabilité du moule vis-à-vis des gaz. Cette étape de traitement de surface peut consister à pratiquer une silanisation hydrophobe de la surface interne du moule (par exemple, au moyen de réactifs tels qu'un silane perfluoré, du trichlorométhylsilane).

Le moule, dans lequel est introduite la solution sol-gel, peut être fixé sur un système mobile, par exemple, rotatif, qui va permettre d'obtenir des pièces de meilleure qualité, le mouvement induit par le système, par exemple, un mouvement de rotation, permettant d'éviter un phénomène d'effondrement du gel lors du processus de séchage ou en d'autres termes permettant de contrer l'effet de gravité. Avantageusement, le système mobile est mis en fonctionnement uniquement après l'introduction de la solution sol-gel et après la gélification de la solution sol-gel de façon concomitante à la mise en oeuvre à l'étape de séchage c). Ce mouvement appliqué peut également contribuer à faciliter l'opération ultérieure de démoulage notamment pour les pièces microstructurées en contact avec l'une des faces du moule, notamment la face inférieure.

Une fois l'étape d'introduction a) achevée, le procédé comprend une étape de gélification de la solution sol-gel en gel.

Cette étape peut consister à placer le moule ainsi rempli au repos pendant une durée suffisante pour la transformation de la solution sol-gel en gel. Cette durée peut être déterminée par l'homme du métier par des expériences de routine et peut varier notamment en fonction du volume de la solution sol-gel, des proportions et des quantités de précurseurs utilisés dans cette solution sol-gel.

Après l'étape de gélification, le procédé de l'invention comprend une étape de séchage du gel (étape c), moyennant quoi le gel compris dans le moule est transformé en le matériau constitutif de l'objet à fabriquer.

Ce matériau peut être un matériau du type céramique, du type verre ou encore un matériau du type hybride inorganique (céramique ou verre)-matériau organique, la nature du matériau étant fonction de la composition de la solution sol-gel de départ.

Cette étape de séchage peut être réalisée selon diverses variantes, parmi lesquelles on peut citer :
- le séchage par fluide supercritique, tel que le dioxyde de carbone supercritique ;
- le séchage par chauffage ;
- le séchage sous vide ;
- le séchage sous atmosphère contrôlé ;
- une combinaison des méthodes de séchage précitées.

Il n'est pas exclu que l'étape de séchage puisse être mise en oeuvre par une combinaison des variantes susmentionnées. En particulier, lorsque l'étape de séchage combine à la fois un séchage part chauffage et un séchage sous vide, cela peut permettre de diminuer substantiellement la durée du séchage par rapport à un séchage par chauffage.

A titre d'exemple, l'étape de séchage peut consister à placer le moule dans un four rotatif et à chauffer ce moule à une température et une durée appropriées (par exemple, 45°C pendant 5 jours) pour permettre la transformation du gel en le matériau constitutif de l'objet à fabriquer, ce chauffage pouvant être combiné à une mise sous vide.

L'objet obtenu selon le procédé de l'invention présente, par rapport au moule, une diminution de ses dimensions sans déformation de sa forme.

L'objet formé par le procédé de l'invention peut être à son tour utilisé comme modèle pour constituer un moule, lequel pourra être utilisé, ensuite, dans un procédé comprenant des étapes conformes à l'invention (étapes a), b) et c) susmentionnées), ces opérations pouvant être répétées autant de fois que possible jusqu'à l'obtention d'un objet présentant les dimensions souhaitées. Ceci peut être particulièrement intéressant pour réaliser des pièces micrométriques microstructurées, sans avoir à recourir à des moyens de microstructuration.

Comme déjà mentionné, le procédé de l'invention permet d'envisager la préparation d'objets en céramique, en verre ou en matériau hybride inorganique-organique, de formes les plus diverses, ce procédé trouvant ainsi application dans de nombreux domaines, tels que :
- le domaine de la détection des gaz, le procédé de l'invention pouvant être utilisé pour concevoir des capteurs à base de céramique ou de verre permettant de guider des ondes électromagnétiques, pouvant se présenter sous forme de structures particulières (telles que des fibres optiques) ;
- le domaine des lasers, le procédé de l'invention pouvant être notamment utilisé pour concevoir des lasers à colorants, ces derniers pouvant être incorporés dans la solution-gel qui sert de base à la préparation des lasers, les monolithes obtenus par le procédé de l'invention présentant des dimensions précises et une excellente qualité de surface ;
- le domaine de la microfluidique, le procédé de l'invention pouvant être notamment utilisé pour concevoir des microcanaux, qui peuvent être élaborés sur des supports, tels que des plaques de verre ;
- le domaine de l'analyse chimique, le procédé de l'invention pouvant être notamment utilisé pour concevoir des microcolonnes destinées à entrer dans la constitution d'appareils chromatographiques, tels que la chromatographie en phase gazeuse ;
- le domaine de l'électro-osmose, le procédé de l'invention pouvant être notamment utilisé pour concevoir des membranes microporeuses et des dispositifs à microcanaux;
- le domaine de l'électrophorèse, le procédé de l'invention pouvant être notamment utilisé pour concevoir des microréacteurs ;
- le domaine de l'optique, le procédé de l'invention pouvant être utilisé pour concevoir des lentilles, des guides d'onde ou de lumière et plus particulièrement des lentilles de Fresnel, comme des microlentilles, et des matrices de microlentilles ;
- le domaine de l'énergie, le procédé de l'invention pouvant être utilisé pour concevoir des matériaux d'électrode, notamment pour les piles à combustible ou les supercondensateurs ou encore pour concevoir des matériaux à stockage de combustible, tel que l'hydrogène ;
- le domaine de la microélectronique, le procédé de l'invention pouvant être utilisé pour concevoir des matériaux isolants, des matériaux piézoélectriques ou des matériaux diélectriques, ces matériaux pouvant être microstructurés.

Concernant les guides de lumière, ceux-ci peuvent être réalisés à l'aide d'un matériau poreux obtenus par la technique sol-gel, renfermant un capteur chimique destiné à réagir en présence d'un analyte, tel qu'un analyte gazeux, les propriétés optiques du matériau pouvant changer en présence d'un analyte donné. On peut ainsi accéder à une grande sensibilité de détection.

Concernant la réalisation de dispositifs microstructurés, grâce au procédé de l'invention, il est ainsi possible d'éviter le recours à des procédés de microstructuration tels que la gravure, ces derniers pouvant laisser un état de surface non maîtrisé.

Pour cela :
- on utilise une pièce microstructurée, destinée à être reproduite, de façon à former un moule ;
- on reproduit cette pièce par le procédé de l'invention, ce qui permet d'obtenir une pièce présentant des microstructures aux dimensions réduites.

Il est possible de réitérer ces opérations, en formant un moule à partir de la pièce précédemment obtenue par le procédé de l'invention. En multipliant les itérations, on peut obtenir une pièce micrométrique sans avoir à recourir à des moyens de microstructuration.

Outre les avantages déjà mentionnés ci-dessus, le procédé de l'invention s'avère également facile à mettre en oeuvre, efficace à basses températures, ce qui le rend compatible avec l'utilisation de nombreuses molécules organiques.

L'invention va à présent être décrite en référence aux modes de réalisation particuliers donnés ci-dessous à titre illustratif et non limitatif.

### BRÈVE DESCRIPTION DES DESSINS

La figure 1 représente les différentes étapes (respectivement parties a, b, c, d) de la préparation d'un monolithe à partir d'une solution sol-gel.
La figure 2 représente une photographie de l'objet obtenu selon l'exemple 1 (appelé « Monolithe sol-gel »), cet objet étant placé à côté de son modèle (appelé « Pièce de référence »).
La figure 3 représente une photographie de l'objet obtenu selon l'exemple 2 (appelé « Monolithe »), cet objet étant placé à côté de son modèle (appelé « Pièce de référence »).
La figure 4 représente une photographie en vue de dessus de l'objet obtenu de l'exemple 3 (dénommé «Plaque en sol-gel »), cet objet étant placé à côté de son modèle (dénommé « Plaque en polycarbonate »).
La figure 5 représente une photographie agrandie en vue de dessus de l'objet obtenu de l'exemple 3 (vue de droite) et de son modèle (vue de gauche).
La figure 6 représente une photographie selon une vue latérale des objets obtenus selon l'exemple 4 (dénommés « Fibres optiques en sol-gel »), ces objets étant placés à côté de leur modèle (dénommé « Fibre commerciale »).
La figure 7 représente une photographie d'une vue d'une face plane des objets obtenus selon l'exemple 4 (dénommés « Fibres optiques en sol-gel »), ces objets étant placés à côté de leur modèle (dénommé « Fibre commerciale »).

### EXPOSÉ DÉTAILLÉ DE MODES DE RÉALISATION PARTICULIERS

### EXEMPLE 1

Cet exemple illustre la préparation d'un objet à partir du procédé de l'invention, cet objet étant une pièce de 1 euro.

### a) Fabrication du moule

Le moule est préparé par la succession d'opérations suivantes :
1- Préparation à l'aide d'une spatule d'un mélange (20 g) de deux composants, respectivement du polydiméthylsiloxane (PDMS) et un agent de réticulation selon un ratio de 10/1 (ces composants étant disponibles auprès de Dow-Corning sous la dénomination de SylGard 184) ;
2- Coulée de ce mélange dans un récipient en plexiglas (de dimensions 5 cm/5 cm) sur une hauteur de 5 mm épaisseur ;
3- Mise sous vide poussé de l'ensemble pendant 20 minutes en cassant le vide suivi d'une cuisson à 70°C pendant 2h ;
4- Après cuisson du mélange (engendrant, ainsi, la réticulation du PDMS), placement de la pièce à mouler sur la couche de PDMS obtenue ;
5- Préparation à l'aide d'une spatule d'un mélange (20 g) de deux composants, respectivement du polydiméthylsiloxane (PDMS) et un agent de réticulation selon un ratio de 10/1 (ces composants étant disponibles auprès de Dow-Corning sous la dénomination de SylGard 184) suivi d'un dégazage sous vide poussé (20 minutes en cassant le vide) ;
6- Coulée du mélange sur la pièce à mouler (posée sur la couche de PDMS préalablement mise en oeuvre) jusqu' à une hauteur de 5 mm au dessus de la pièce ;
7- Application d'un vide poussé pendant 30 minutes pour dégazer l'ensemble ;
8- Chauffage de l'ensemble à 80°C pendant 2 heures, de sorte à engendrer la réticulation du polydiméthylsiloxane, moyennant quoi il forme une couche solide autour de la pièce ;
9- Démoulage manuel du moule ;
10- Découpe du surplus de PDMS jusqu'à l'obtention d'une épaisseur de moule uniforme de 5 mm ;
11- Ouverture du moule en PDMS en deux parties à l'aide d'un scalpel pour retirer la pièce de départ prise dans le moule en PDMS.

Les deux parties du moule en PDMS sont ensuite recollées après activation par plasma selon les conditions suivantes :
1- On place les deux parties du moule dans un plasma O₂ (Plasma O₂ AST Product Inc), les conditions suivantes étant appliquées pour activer les fonctions de surface du PDMS (PO₂ 1 bar ; Puissance 20 Watt; Durée 20 sec ; Réseau d'adaptation 50-50% ; Gaz 120 ; Flux de gaz 60 ; Point de fonctionnement 0,5) ;
2- Après application du plasma, les deux surfaces du moule à coller sont mises en contact. Une pression est exercée pour améliorer le contact entre les deux surfaces et améliorer ainsi le collage ;
3- L'ensemble est mis à l'étuve à 80°C pendant 4h.

Les deux parties du moule sont ainsi collées, moyennant quoi l'on obtient un moule de la pièce, cette dernière ayant laissé son empreinte à l'intérieur de ce moule.

### b) Fabrication de la solution sol-gel

La solution sol-gel est préparée par la succession suivante d'opérations :
1- Mélange à -25°C sous agitation de 3,4 mL (0,023 mol) de triméthoxysilane (681-84-5 Sigma-Aldrich) et 4,5 mL (0,11 mol) de méthanol anhydre, auxquels on ajoute 0,04 mL ((0,17 mmol) d'APTES (catalyseur tétraméthylorthosilicate 919-30-2 fourni auprès de Sigma-Aldrich) ;
2-Ajout d'une eau ultrapure 1,7 mL (0,094 mol) ;
3-Après 30 secondes d'agitation, prélèvement avec une seringue de 10 mL de la solution sol-gel.

### c) Fabrication de l'objet en tant que tel

L'objet est préparé selon la succession d'opérations suivantes :
1- Conditionnement préalablement du moule à -25°C ;
2- Introduction d'une aiguille dans la partie supérieure du moule pour permettre l'évacuation de l'air, lorsque la solution de sol-gel sera injectée ;
3- Insertion de l'aiguille de la seringue contenant la solution sol-gel (qui vient juste d'être prélevée) dans le moule suivie d'une injection lente de la solution pour éviter d'avoir un régime turbulent en sortie de l'aiguille et éviter la formation de bulles d'air sur les parois du moule ;
4- Retrait de l'aiguille d'évacuation d'air lorsque le moule est rempli de solution sol-gel et maintien d'une certaine pression à l'intérieur du moule avec la seringue avant de la retirer ;
5- Mise au repos du moule contenant la solution sol-gel à température ambiante pendant 30 minutes jusqu'à l'obtention d'un gel ;
6- Séchage de l'ensemble dans un four rotatif (Agilent technologies, model GA) à 40°C pendant 4 jours à une vitesse de rotation inférieure à une rotation par minute ;
7- Après séchage, ouverture du moule en PDMS en deux parties pour retirer le monolithe sol-gel ainsi fabriqué.

L'objet obtenu (représenté sur la figure 2 jointe en annexe à côté de la pièce qui a servi à concevoir le moule) présente les mêmes motifs sur les deux faces que ceux de la pièce d'origine. Etant donné que l'objet est transparent, en observant une face, il est possible d'apercevoir également les motifs de la face opposée.

L'objet obtenu présente des dimensions plus faibles que celles de la pièce d'origine (les dimensions étant environ deux fois inférieures à celles de la pièce d'origine), sans que cela n'affecte la reproduction des motifs présents sur les deux faces ainsi que sur la tranche.

### EXEMPLE 2

Cet exemple illustre la préparation d'un objet à partir du procédé de l'invention, cet objet étant un objet décoratif présentant une forme de diamant.

### a) Fabrication du moule

Le moule est préparé dans des conditions similaires à celles de l'exemple 1, à partir d'un objet décoratif se présentant sous forme d'un diamant présentant les dimensions suivantes : 50 mm de longueur, 29,5 mm de largeur et 18 mm de hauteur.

### b) Fabrication de la solution sol-gel

La solution sol-gel est préparée dans des conditions similaires à celles de l'exemple 1.

### c) Fabrication de l'objet en tant que tel

L'objet est fabriqué dans des conditions similaires à celles de l'exemple 1.

L'objet obtenu (représenté sur la figure 3 jointe en annexe à côté de l'objet d'origine qui a servi à concevoir le moule) respecte avec une grande précision les côtes de l'objet d'origine sur toutes les faces, avec des dimensions réduites de 42% sur toutes les côtes (les dimensions étant respectivement de 29 mm pour la longueur, 17 mm pour la largeur et de 10,5 mm pour la hauteur). Le retrait pendant l'étape de séchage a été ainsi uniforme pour tous les axes de l'objet.

### EXEMPLE 3

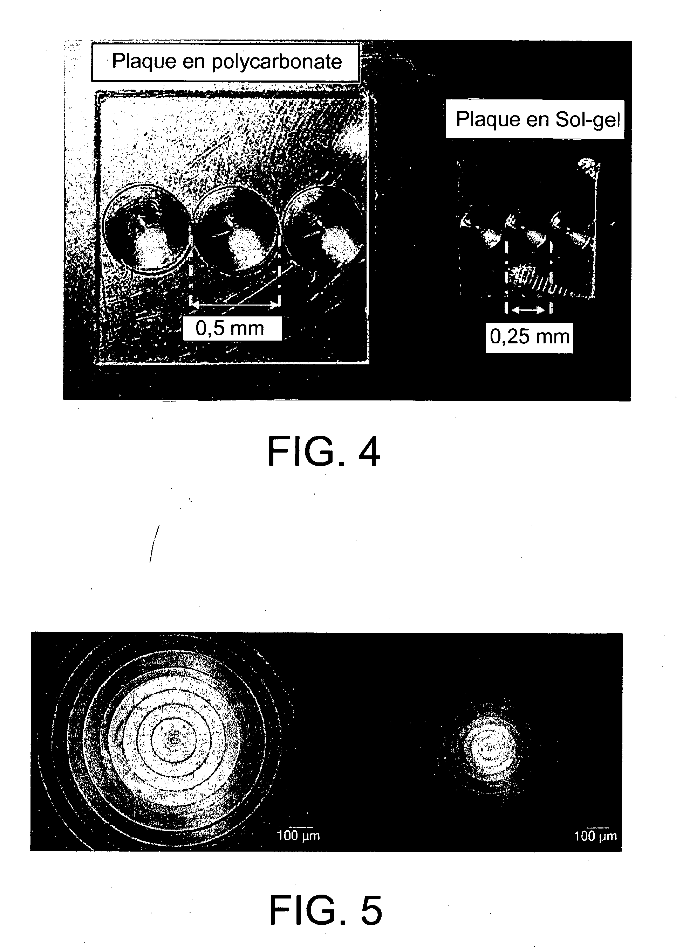

Cet exemple illustre la préparation d'un objet à partir du procédé de l'invention, cet objet étant une plaque comportant trois microlentilles de Fresnel (gravées sur une des faces de la plaque), cette plaque étant illustrée sur la figure 4 jointe en annexe (cette plaque étant dénommée « Plaque en polycarbonate »).

### a) Fabrication du moule

Le moule est préparé dans des conditions similaires à celles de l'exemple 1, à partir de la plaque représentée sur la figure 4.

### b) Fabrication de la solution sol-gel

La solution sol-gel est préparée dans des conditions similaires à celles de l'exemple 1.

### c) Fabrication de l'objet en tant que tel

L'objet est fabriqué dans des conditions similaires à celles de l'exemple 1.

L'objet obtenu (représenté sur la figure 4 jointe en annexe à côté de la pièce qui a servi à concevoir le moule) présente les mêmes motifs sur une des faces que ceux de la pièce d'origine.

L'objet obtenu présente des dimensions plus faibles que celles de la pièce d'origine (les dimensions étant environ deux fois inférieures à celles de la pièce d'origine), sans que cela n'affecte la reproduction des motifs. Etant donné que les motifs de la pièce d'origine présentent un espacement de 60 µm, les motifs de la pièce en sol-gel après séchage présentent un espacement de 30 µm. La reproduction de la pièce d'origine a été respectée de telle sorte que même les défauts de surface de cette pièce sont observés sur la pièce en sol-gel (comme cela ressort de la figure 5).

En conclusion, le procédé de l'invention permet la réalisation de lentilles du type Fresnel.

Ainsi, l'invention permet de réaliser une lentille en verre microstructurée sans rencontrer les inconvénients classiquement rencontrés lorsqu'on chercher à réaliser une telle lentille par des procédés de gravure. En effet, lorsqu'on souhaite réaliser un dispositif en verre microstructuré, tel qu'une lentille de Fresnel, les procédés de gravure ne permettent pas d'obtenir une surface parfaitement lisse.

Pourtant, dans le domaine de l'optique, on préfère utiliser le verre, du fait de sa bonne résistance thermique ou de sa faible absorption aux rayonnements UV. C'est pourquoi on préfère utiliser des lentilles de verre à des lentilles de plastique, ces dernières étant pourtant moins onéreuses, et plus facile à réaliser.

L'invention permet de remédier à cet inconvénient en prenant, comme matériau de départ, une lentille de plastique, qui va servir de base à la réalisation d'un moule. Ensuite, en utilisant le moule, on peut obtenir une lentille à partir de la technique sol-gel, et donc dans un matériau tel que le verre, sans nécessiter la mise en oeuvre de procédés de gravure et les inconvénients associés (concernant les coûts et les difficultés d'avoir une surface parfaitement lisse).

### EXEMPLE 4

Cet exemple illustre la préparation d'un objet à partir du procédé de l'invention, cet objet étant un guide de lumière.

### a) Nature du moule

Le moule utilisé est un tube commercial en silicone, de 3 mm de diamètre intérieur, de 1 mm d'épaisseur et de 26 cm de longueur.

Ce tube est placé dans un dessicateur. Un dégazage sous vide poussé est appliqué pendant 3 heures pour éliminer d'éventuelles molécules de faibles masses molaires introduites lors de la production du tube (plastifiants, additifs...). Cette étape permet d'éviter de polluer la fibre optique par ces molécules.

### b) Fabrication de la solution sol-gel

La solution sol-gel est préparée dans des conditions similaires à celles de l'exemple 1.

### c) Fabrication de l'objet en tant que tel

Un bouchon en téflon est introduit sur l'une des extrémités du tube susmentionné. La face du bouchon qui sera en contact avec le sol-gel a été préalablement polie jusqu'à obtention d'une surface lisse.

Ensuite, l'objet est fabriqué dans des conditions similaires à celles de l'exemple 1.

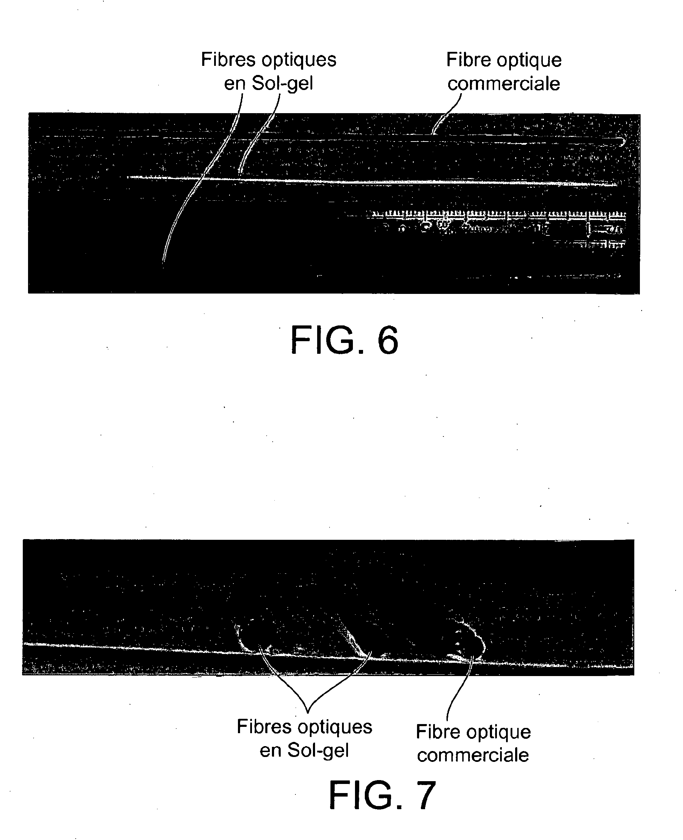

Deux objets en sol-gel obtenus par la présente invention sont représentés sur les figures 6 et 7 jointes en annexe à côté d'une fibre commerciale. Les monolithes sont longs de 13 cm et présentent un diamètre de 1,3 mm.

### EXEMPLE 5

Cet exemple illustre la préparation d'un objet à partir du procédé de l'invention, cet objet étant une lentille optique à base de silice et d'oxyde de titane (TiO₂-SiO₂).

### a) Traitement de la lentille (qui joue ici le rôle de master)

Un traitement de surface par du FDTS (correspondant à du perfluorodécyltrichlorosilane) après activation plasma de la surface de la lentille et nécessaire. Le polydiméthylsiloxane (PDMS) peut former des liaisons covalentes avec le verre pendant l'étape de réticulation du moule ce qui pourrait rendre le démoulage de la lentille impossible. Ce traitement permet d'éviter la formation de telles liaisons covalentes du master avec le moule.

### b) Fabrication du moule

Le moule est préparé par la succession d'opérations suivantes :
1- Préparation à l'aide d'une spatule d'un mélange (20 g) de deux composants, respectivement du polydiméthylsiloxane (PDMS) et un agent de réticulation selon un ratio de 10/1 (ces composants étant disponibles auprès de Dow-Corning sous la dénomination de SylGard 184) ;
2- Coulée de ce mélange dans un récipient en plexiglas (de dimensions 5 cm/5 cm) sur une hauteur de 5 mm épaisseur ;
3- Mise sous vide poussé de l'ensemble pendant 20 minutes en cassant le vide suivie d'une cuisson à 80°C pendant 1 heure ;
4- Après cuisson du mélange (engendrant, ainsi, la réticulation du PDMS), placement de la lentille à mouler sur la couche de PDMS obtenue ;
5- Préparation à l'aide d'une spatule d'un mélange (20 g) de deux composants, respectivement du polydiméthylsiloxane (PDMS) et un agent de réticulation selon un ratio de 10/1 (ces composants étant disponibles auprès de Dow-Corning sous la dénomination de SylGard 184) suivie d'un dégazage sous vide poussé (20 minutes en cassant le vide) ;
6- Coulée du mélange sur la pièce à mouler (posée sur la couche de PDMS préalablement mise en oeuvre) jusqu'à une hauteur de 5 mm au-dessus de la lentille ;
7- Application d'un vide poussé pendant 30 minutes pour dégazer l'ensemble ;
8- Chauffage de l'ensemble à 80°C pendant 1 heure, de sorte à engendrer la réticulation du polydiméthylsiloxane, moyennant quoi il forme une couche solide autour de la pièce ;
9- Démoulage manuel du moule ;
10- Découpe du surplus de PDMS jusqu'à l'obtention d'une épaisseur de moule uniforme de 5 mm ;
11- Ouverture du moule en PDMS en deux parties à l'aide d'un scalpel pour retirer la pièce de départ prise dans le moule en PDMS.

Les deux parties du moule en PDMS sont ensuite recollées après activation par plasma selon les conditions suivantes :
1- On place les deux parties du moule dans un plasma O₂ (Plasma O₂ AST Product Inc), les conditions suivantes étant appliquées pour activer les fonctions de surface du PDMS (PO₂ 1 bar ; Puissance 20 Watt ; Durée 20 sec ; Réseau d'adaptation 50-50% ; Gaz 120 ; Flux de gaz 60 ; Point de fonctionnement 0,5) ;
2- Après application du plasma, les deux surfaces du moule à coller sont mises en contact. Une pression est exercée pour améliorer le contact entre les deux surfaces et améliorer ainsi le collage ;
3- L'ensemble est mis à l'étuve à 80°C pendant 4 heures. Les deux parties du moule sont ainsi collées, moyennant quoi l'on obtient un moule de la pièce, cette dernière ayant laissé son empreinte à l'intérieur de ce moule.

### c) Fabrication de la solution sol-gel

La solution sol-gel est préparée par la succession d'opérations suivantes :
1- Préparation de la solution 1 : Mélange à température ambiante sous agitation de 2,330 mL (0,0104 mol) de tétraéthyl orthosilicate (78-10-4 Sigma-Aldrich) et 300 µL (0,017 mol) d'eau, auxquels on ajoute 1 mL d'éthanol anhydre. Ajout de 0.5 µl de d'acide chlorhydrique à 1 molaire sous agitation ;
2- Mise de la solution 1 dans un pilulier fermé hermétiquement à l'étuve à 80°C pendant 12 heures pour hydrolyser le précurseur ;
3-Après 12 heures d'hydrolyse, la solution 1 est sortie de l'étuve et refroidie à température ambiante ;
4-Prélèvement de 2 mL de la solution 1 dans un pilulier, auxquels on ajoute 979 µl de butoxyde de titanium (IV) (5593-70-4 Sigma- Aldrich). Bien mélanger et laisser agir pendant 1 heure ;
5-Préparation de la solution 2 : 5 mL d'éthanol anhydre dans un pilulier, auxquels on ajoute 600 µl d'ammoniaque (solution aqueuse d'hydroxyde d'ammonium). Il faut fermer hermétiquement le pilulier dès l'ajout de l'ammoniaque puisque l'ammoniac (NH₃) est très volatile. La solution aqueuse d'hydroxyde d'ammonium est utilisée pour la condensation sous catalyse basique des précurseurs pour former le gel ;
6- Préparation de la solution sol-gel : Ajouter 1,5 mL de la solution 2 au mélange préalable (solution 1 + butoxyde de titanium (IV)). Le pilulier est fermé hermétiquement et la solution est ensuite agitée légèrement (pour éviter une formation excessive de bulles) jusqu'à homogénéisation. Laisser reposer environ 1 minute jusqu'à disparition des bulles. Ainsi, on obtient un mélange d'environ 30% molaire de précurseur de titane, et donc 70% molaire de précurseur de silicium.
7- Prélèvement avec une seringue de 2 mL de la solution sol-gel. Cette étape ainsi que l'étape d'injection qui suit doivent s'effectuer rapidement après l'étape précédente pour pouvoir injecter le sol (solution sol-gel) avant sa réticulation.

### d) Fabrication de l'objet en tant que tel

L'objet est préparé selon la succession d'opérations suivantes :
1- Introduction d'une aiguille dans la partie supérieure du moule pour permettre l'évacuation de l'air, lorsque la solution de sol-gel sera injectée ;
2- Insertion de l'aiguille de la seringue contenant la solution sol-gel (qui vient juste d'être prélevée conformément à l'étape 7 précédemment décrite) dans le moule suivie d'une injection lente de la solution pour éviter d'avoir un régime turbulent en sortie de l'aiguille et éviter la formation de bulles d'air sur les parois du moule ;
3- Retrait de l'aiguille d'injection lorsque le moule est rempli, retirer l'aiguille d'évacuation d'air par la suite de solution ;
4- Mise au repos du moule contenant là solution sol-gel à température ambiante pendant 1 heure jusqu'à l'obtention d'un gel dense;
5- Séchage de l'ensemble dans un four rotatif (Agilent technologies, model GA) à 45°C pendant 5 jours à une vitesse de rotation inférieure à une rotation par minute ;
6- Après séchage, ouverture du moule en PDMS en deux parties pour retirer le monolithe sol-gel ainsi fabriqué.

L'objet obtenu présente les caractéristiques de la lentille plan concave de la lentille qui a servi de master. Les dimensions de la pièce finale en sol-gel (diamètre et épaisseur) ont subi un rétreint d'environ 56 % par rapport au master en verre d'origine.
Master d'origine (Ø = 12.29 mm, épaisseur = 3.27 mm)
Pièce obtenue à partir la solution en sol-gel (Ø = 10.06 mm, épaisseur = 1.49 mm).

La fabrication de la solution sol-gel TiO2-SiO2 permet d'obtenir des composants présentant des caractéristiques intéressantes pour certaines applications. En effet ce type de matériau permet d'obtenir un indice optique largement supérieur à une solution sol-gel à base de SiO2 seulement. Ce type de sol-gel présente aussi un caractère superhydrophile très intéressant pour certaines applications micro-fluidiques.

## Revendications

1. Procédé de fabrication d'un objet en un matériau constitutif obtenu à partir d'une solution sol-gel comprenant successivement les étapes suivantes :
a) une étape d'introduction dans un moule de l'objet à fabriquer de ladite solution sol-gel ;
b) une étape de gélification de la solution sol-gel ;
c) une étape de séchage dans ledit moule dudit gel obtenu en b), moyennant quoi ledit gel se transforme en le matériau constitutif de l'objet susmentionné, **caractérisé en ce que** le moule consiste en une enceinte fermée, c'est-à-dire un moule isolé de l'atmosphère ambiante entourant ledit moule, une fois la solution sol-gel introduite dans celui-ci et ledit moule comprend un matériau apte à permettre l'évacuation des gaz formés lors de l'étape b) et/ou l'étape c).

2. Procédé selon la revendication 1, dans lequel le matériau du moule est un matériau élastomère.

3. Procédé selon la revendication 1 ou 2, dans lequel le matériau du moule est un matériau de la famille des polysiloxanes.

4. Procédé selon l'une quelconque des revendications précédentes, dans lequel le matériau du moule est un matériau de la famille des polydiméthylsiloxanes.

5. Procédé selon l'une quelconque des revendications précédentes, comprenant, avant l'étape d'introduction a), une étape de préparation du moule de l'objet à fabriquer.

6. Procédé selon l'une quelconque des revendications précédentes, comprenant, avant l'étape d'introduction a), une étape de préparation de la solution sol-gel.

## Patentansprüche

1. Verfahren zur Herstellung eines Gegenstands aus einem konstitutiven Material, das ausgehend von einer Sol-Gel-Lösung erhalten wird, umfassend nacheinander die folgenden Schritte:
a) einen Schritt des Einbringens der Sol-Gel-Lösung in eine Form des herzustellenden Gegenstands;
b) einen Schritt des Gelierens der Sol-Gel-Lösung;
c) einen Schritt des Trocknens des in b) erhaltenen Gels in der Form, wodurch sich das Gel in das konstitutive Material des genannten Gegenstands transformiert, **dadurch gekennzeichnet, dass** die Form aus einer geschlossenen Hülle besteht, das heißt eine Form ist, die von der die formumgebenen Umgebungsatmosphäre isoliert ist, sobald die Sol-Gel-Lösung in selbige eingebracht ist, und die Form ein Material umfasst, das dazu ausgelegt ist, die Abfuhr der Gase zu ermöglichen, die während des Schritts b) und/oder des Schritts c) gebildet werden.

2. Verfahren nach Anspruch 1, bei dem das Material der Form ein Elastomermaterial ist.

3. Verfahren nach Anspruch 1 oder 2, bei dem das Material der Form ein Material aus der Familie der Polysiloxane ist.

4. Verfahren nach einem der vorhergehenden Ansprüche, bei dem das Material der Form ein Material aus der Familie der Polydemethylsiloxane ist.

5. Verfahren nach einem der vorhergehenden Ansprüche, das vor dem Schritt des Einbringens a) einen Schritt des Präparierens der Form des herzustellenden Gegenstands umfasst.

6. Verfahren nach einem der vorhergehenden Ansprüche, das vor dem Schritt des Einbringens a) einen Schritt des Präparierens der Sol-Gel-Lösung umfasst.

## Claims

1. Process for manufacturing an object made of a constituent material obtained from a sol-gel solution successively comprising the following steps:
a) a step of introducing said sol-gel solution into a mould of the object to be manufactured;
b) a step of gelling the sol-gel solution;
c) a step of drying said gel obtained in b) in said mould, by means of which said gel is converted into the constituent material of the aforementioned object, **characterised in that** the mould consists of a closed chamber, i.e. a mould isolated from the ambient atmosphere surrounding said mould, once the sol-gel solution is introduced into the mould, and said mould comprising a material suitable for allowing the evacuation of the gases formed during step b) and/or step c).

2. Process according to claim 1, wherein the material of the mould is an elastomeric material.

3. Process according to claim 1 or 2, wherein the material of the mould is a material of the family of polysiloxanes.

4. Process according to any of the preceding claims, wherein the material of the mould is a material of the family of polydimethylsiloxanes.

5. Process according to any of the preceding claims, comprising, before the step of introduction a), a step of preparation of the mould of the object to be manufactured.

6. Process according to any of the preceding claims, comprising, before the step of introduction a), a step of preparation of the sol-gel solution.
